# EUROPEAN PATENT APPLICATION

(11) **EP 2 762 554 A1**
(43) Date of publication of application: **06.08.2014**
(21) Application number: 12836766.1
(22) Date of filing: 28.09.2012
(51) Int. Cl.: C10M 169/02, C10M 105/38, C10M 115/08, F16C 33/66, C10N 20/02, C10N 30/06, C10N 30/08, C10N 40/02, C10N 50/10

(54) **GREASE COMPOSITION FOR ROLLING BEARING, AND ROLLING BEARING**

(30) Priority: 30.09.2011 JP 2011216994
(71) Applicant: NSK Ltd., Tokyo 141-8560 (JP)
(72) Inventor: NAKAGAWA, Kazunori, Kanagawa 251-8501 (JP); TODA, Yuujiro, Kanagawa 251-8501 (JP); HACHIYA, Koichi, Kanagawa 251-8501 (JP)
(74) Representative: Grünecker, Kinkeldey, Stockmair & Schwanhäusser
(86) International application number: PCT/JP2012/075147
(87) International publication number: WO 2013/047781

(57) **Abstract**

The present invention provides: a grease composition for rolling bearings which includes a base oil and a diurea compound incorporated therein as a thickener, the base oil including at least one oil selected from trimethylolpropane fatty acid ester oils and pentaerythritol fatty acid esters or a mixed oil which includes the at least one oil and another lubricating oil and having a kinematic viscosity at 40°C of 19-35 mm²/s and an amount of evaporation through 250-hour holding at 150°C of 10-15% by mass; and a rolling bearing packed with the grease composition.

## Description

### Technical Field

The present invention relates to a rolling bearing suitable for use in applications in which the dmN (product of the ball revolution diameter and the number of revolutions) exceeds 1,000,000 and to a grease composition suitable for lubrication of the rolling bearing.

### Background Art

Hybrid vehicles (HEV), fuel-cell vehicles (FV), and electric vehicles (EV), which are cleaner than the conventional diesel engines and gasoline engines, are being developed in the field of automobiles in order to reduce the emission of exhaust gases, including carbon dioxide, for the purpose of environmental preservation. Since these automobiles are driven by motors, increases in motor power are required. It is hence necessary for a motor to be increased in rotation speed, and the motor bearings for movably supporting the rotating shaft of the motor also rotate at a high speed.

Although grease compositions are packed into motor bearings in order to lubricate the bearings, use is being made of grease compositions in which the base oil includes an ester oil and the thickener includes a urea compound in order to enable the grease compositions to withstand high temperatures due to the high-speed rotation. The present applicant previously proposed a grease composition including both a base oil containing an ester oil having a kinematic viscosity at 40°C of 10-50 mm²/s in a proportion of 50% by mass or higher based on the whole base oil and a mixture of an aliphatic urea compound and an alicyclic urea compound as a thickener (see patent document 1).

### Background Art Document

Patent Document

Patent Document 1: JP-A-2009-1611

### Summary of Invention

### Problem that Invention is to Solve

However, the trend toward speed increase in motor bearings is unavoidable, and the motor bearings have come to be required to withstand such high-speed rotation that the dmN exceeds 1,000,000 and the bearing temperature exceeds 100°C. It is desired to improve the grease compositions to be packed thereinto.

The invention has been achieved in view of such circumstances. An object of the invention is to provide a rolling bearing which can withstand such high-speed rotation that the dmN exceeds 1,000,000 and the bearing temperature exceeds 100°C and a grease composition suitable for the rolling bearing.

### Means for Solving Problem

The invention provides the following in order to accomplish the object.
(1) A grease composition for rolling bearings, characterized by comprising a base oil and a diurea compound incorporated therein as a thickener, the base oil comprising at least one oil selected from trimethylolpropane fatty acid ester oils and pentaerythritol fatty acid esters or a mixed oil which comprises the at least one oil and another lubricating oil and having a kinematic viscosity at 40°C of 19-35 mm²/s and an amount of evaporation through 250-hour holding at 150°C of 10-15% by mass.
(2) The grease composition for rolling bearings as described in (1) above, characterized in that the diurea compound is represented by the following general formula (1): 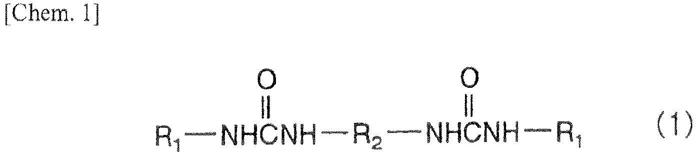 (wherein R₁ represents an alkyl group having 6-20 carbon atoms, a cyclohexyl group or an alkylcyclohexyl group having 7-12 carbon atoms, and the two R₁ moieties may be different or the same; and R₂ represents a divalent hydrocarbon group containing an aromatic ring and having 6-15 carbon atoms).
(3) The grease composition for rolling bearings as described in (2) above, characterized in that the diurea compound is a mixture of an aliphatic diurea compound and an alicyclic diurea compound, a proportion of the alicyclic diurea compound being 30-50% by mole.
(4) A rolling bearing characterized by being packed with the grease composition as described in any one of (1) to (3) above.

### Effects of Invention

In the grease composition for rolling bearings of the invention, the base oil includes at least one oil selected from trimethylolpropane fatty acid ester oils and pentaerythritol fatty acid esters, which have a low viscosity, a small amount of high-temperature evaporation, and excellent heat resistance, and the thickener includes a diurea compound, which has excellent heat resistance. Consequently, the grease composition not only has excellent heat resistance but also can attain a low torque to inhibit heat generation. Because of this, the rolling bearing of the invention, into which such grease composition has been packed, has durability whereby the rolling bearing can sufficiently withstand high-speed rotation in which the dmN exceeds 1,000,000.

### Brief Description of Drawings

[Fig. 1] Fig. 1 is a cross-sectional view which illustrates a ball bearing as one embodiment of the rolling bearing according to the invention.
[Fig. 2] Fig. 2 is a graph which shows the range of base-oil kinematic viscosities according to the invention.
[Fig. 3] Fig. 3 is a graph which shows the results of Test 1.
[Fig. 4] Fig. 4 is a graph which shows the results of Test 2.
[Fig. 5] Fig. 5 is a graph which shows the results of Test 3.

### Mode for Carrying Out Invention

The invention will be explained below in detail.

### (Grease Composition for Rolling Bearings)

In the grease composition for rolling bearings (hereinafter referred to simply as "grease composition") of the invention, the base oil includes at least one oil selected from trimethylolpropane fatty acid ester oils and pentaerythritol fatty acid esters. As the fatty acids, use is mainly made of monovalent fatty acids having 4-16 carbon atoms. Examples thereof include butyric acid, valeric acid, caproic acid, caprylic acid, enanthic acid, pelargonic acid, capric acid, undecanoic acid, lauric acid, myristic acid, palmitic acid, beef tallow fatty acid, stearic acid, caproleic acid, palmitoleic acid, petroselinic acid, oleic acid, elaidic acid, sorbic acid, linoleic acid, linolenic acid, and ricinoleic acid.

The base oil may be at least one oil selected from trimethylolpropane fatty acid ester oils and pentaerythritol fatty acid esters, or may be a mixed oil which is a mixture of the at least one oil and other lubricating oil(s).

Examples of the lubricating oils which can be mixed therewith include ether oils such as (di)alkyl diphenyl ether oils, (di)alkyl polyphenyl ether oils, and polyalkylene glycol oils, mineral oils such as paraffinic mineral oils and naphthenic mineral oils, and synthetic hydrocarbon oils such as poly(α-olefin) oils. It is preferred that the proportion of the trimethylolpropane fatty acid ester oil or pentaerythritol fatty acid ester in the mixed oil should be 50% by mass or higher based on the whole mixed oil.

It is also possible to mix a diester oil, e.g., dioctyl adipate (DOA), diisobutyl adipate (DIBA), dibutyl adipate (DBA), dioctyl azelate (DOZ), dibutyl sebacate (DBS), dioctyl sebacate (DOS), or methyl acetylricinolate (MAR-N), an aromatic ester oil, e.g., trioctyl trimellitate (TOTM), tridecyl trimellitate, or tetraoctyl pyromellitate, or a polyol ester oil which is an ester of a polyhydric alcohol, e.g., dipentaerythritol (DPE), neopentyl glycol (NPG), or 2-methyl-2-propyl-1,3-propanediol (MPPD), with a fatty acid.

The viscosity of the base oil is 19-35 mm²/s in terms of kinematic viscosity as measured at 40°C. In case where the kinematic viscosity thereof is less than 19 mm²/s (40°C), this base oil has insufficient flowability at low temperatures, resulting in poor lubricity. In case where the kinematic viscosity thereof exceeds 35 mm²/s (40°C), the rolling bearing undergoes enhanced heat generation in high-speed rotation to suffer seizure, etc., resulting in an insufficient life. The kinematic viscosity thereof is preferably 19-30 mm²/s (40°C). In the case where the base oil is at least one oil selected from trimethylolpropane fatty acid ester oils and pentaerythritol fatty acid esters, the kinematic viscosity of this oil itself is within that range. In the case where the at least one oil is mixed with other lubricating oil(s), the kinematic viscosity of the mixed oil is regulated to a value within that range.

Furthermore, the base oil has an amount of evaporation, as measured after the base oil has been held at 150°C for 250 hours, of 10-15% by mass. By using the base oil having such an amount of evaporation, high-temperature durability is improved. The amount of evaporation thereof is preferably 10-13.5% by mass.

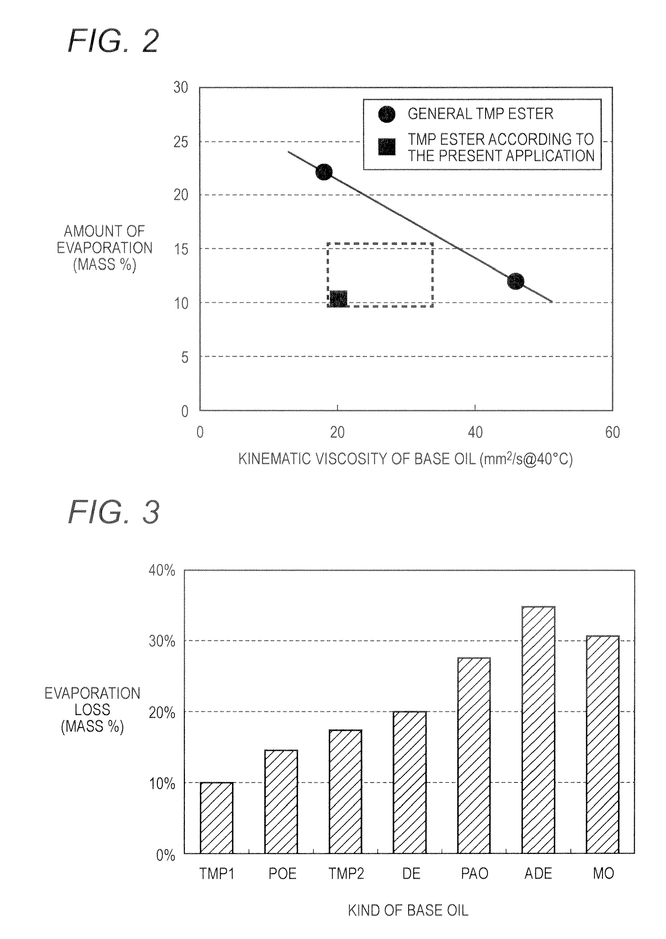

As described above, the base oil to be used in the invention includes at least one oil selected from trimethylolpropane fatty acid ester oils and pentaerythritol fatty acid esters or a mixed oil which includes the at least one oil and another lubricating oil, and the base oil has a kinematic viscosity at 40°C of 19-35 mm²/s and an amount of evaporation through 250-hour holding at 150°C of 10-15% by mass as shown in Fig. 2.

A diurea compound is used as the thickener because of the excellent heat resistance thereof. As the diurea compound, use may be made of compounds represented by the following general formula (1), which show satisfactory thickening properties, because it is necessary to reduce thickener amount while taking account of heat generation properties.

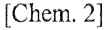

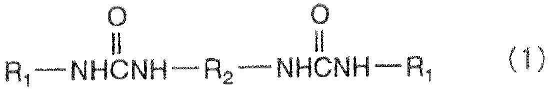

In the formula, R₁ represents an alkyl group having 6-20 carbon atoms, a cyclohexyl group, or an alkylcyclohexyl group having 7-12 carbon atoms, and the two R₁ moieties may be different or the same; and R₂ represents a divalent hydrocarbon group containing an aromatic ring and having 6-15 carbon atoms.

It is preferred that the specific diurea compounds should be a mixture of an aliphatic diurea compound and an alicyclic diurea compound, and that the proportion of the alicyclic diurea compound should be 30-50% by mole. The ratio of the aliphatic diurea compound to the alicyclic diurea compound considerably affects the bearing temperature, and in case where the proportion of the alicyclic diurea compound exceeds 50% by mole, the bearing temperature rises considerably. Meanwhile, the lower the proportion of the alicyclic diurea compound, the more the grease softens upon shearing. In case where the proportion thereof is less than 30%, the grease has especially high shear flowability and is less apt to form an oil film. The proportion of the alicyclic diurea compound is more preferably 30-45% by mole.

Although the diurea compounds represented by general formula (1) are products of reaction between an isocyanate ingredient containing R₂ and a monoamine ingredient containing R₁, the monoamine ingredient may be composed of an aliphatic monoamine and an alicyclic monoamine which are reacted so that the proportion of the alicyclic monoamine is 30-50% by mole.

The amount of the diurea compound(s) incorporated into the grease composition is preferably 10-20% by mass based on the whole grease composition. In case where the incorporation amount thereof is less than 10% by mass, this grease composition has too high flowability and is less apt to form an oil film. In case where the amount thereof exceeds 20% by mass, this grease composition has increased agitation resistance, resulting in enhanced heat generation.

It is preferred that the consistency of the grease composition should be regulated to 1-3 in terms of LNGI consistency number.

Various additives may be added to the grease composition. In particular, the slipping which occurs between the rolling elements and the cage in roller bearings or the slipping which occurs between the rollers and the collars in roller bearings causes enhanced wear in the case where the bearings rotate at high speeds, and this wear may result in seizure. By adding an extreme-pressure agent, the wear occurring under sliding conditions can be prevented to prolong the seizure life. Preferred as the extreme-pressure agent are ash-free phosphorous acid esters such as tetraphenyl dipropylene glycol diphosphite, tetra(tridecyl) 4,4'-isopropylidenediphenyl phosphite, dilauryl hydrogen phosphite, tris(nonylphenyl) phosphite, monoisodecyl phosphate, and triphenyl phosphite, ash-free thiophosphoric acid esters such as triphenyl phosphorothionate, and ash-free dithiocarbamic acid salts such as pentamethylenedithiocarbamic acid piperidine salt. These compounds may be used alone or in combination of two or more thereof. The amount of the extreme-pressure agent to be added is preferably 0.1-5% by mass based on the whole grease composition. In case where the amount thereof is less than 0.1% by mass, necessary extreme-pressure properties cannot be obtained. In case where the amount thereof exceeds 5% by mass, the grease composition may have enhanced reactivity, resulting in the possibility of inducing a grease deterioration or accelerating wear.

Furthermore, an antioxidant, rust preventive, metal deactivator, oiliness improver, etc. may be added besides the extreme-pressure agent according to need. These additives each may be a known one, and the amount of each additive also is not limited so long as the effects of the invention are not lessened thereby.

### (Rolling Bearing)

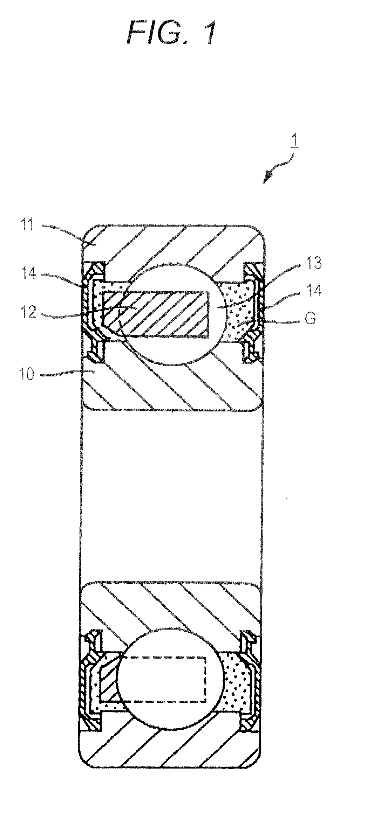

The present invention further relates to a rolling bearing packed with the grease composition described above. There are no limitations on the kind of the bearing. However, this rolling bearing is suitable as rolling bearings for use in applications where the dmN exceeds 1,000,000, for example, motor bearings for use in hybrid vehicles. Fig. 1 is a cross-sectional view which shows the structure of a ball bearing as one embodiment thereof. The ball bearing 1 shown in the figure is configured of an inner ring 10, an outer ring 11, a plurality of balls 13 which have been freely rollably disposed between the inner ring 10 and the outer ring 11, a cage 12 which holds the balls 13, and contact type seals 14 and 14 attached to the outer ring 11. The grease composition G has been filled into the bearing space surrounded by the inner ring 10, outer ring 11, and seals 14 and 14, and is confined in the ball bearing 1 with the seals 14. Due to the grease composition G, this ball bearing 1 is reduced in heat generation and has an excellent seizure life.

Besides the ball bearing, examples of the rolling bearing include radical type rolling bearings such as angular ball bearings, self-aligning ball bearings, cylindrical roller bearings, tapered roller bearings, needle roller bearings, and self-aligning roller bearings and thrust type rolling bearings such as thrust ball bearings and thrust roller bearings. The grease composition is likewise packed into such bearings.

Some of bearings for machine tools are rotated at such high speeds that the dmN exceeds 1,000,000. The rolling bearing of the invention is suitable also as bearings for machine tools.

### Examples

The invention will be explained below in more detail by reference to Examples, but the invention should not be construed as being limited in any way by the following Examples.

### (TEST 1)

Trimethylolpropane fatty acid ester 1 (Example 1), a pentacrythritol fatty acid ester (Example 2), trimethylolpropane fatty acid ester 2 (Comparative Example 1), a diester (Comparative Example 2), a poly(α-olefin) (Comparative Example 3), an alkyl diphenyl ether (Comparative Example 4), and a mineral oil (Comparative Example 5) were prepared as shown in Table 1. Forty grams of each oil was weighed out and placed on a petri dish made of stainless steel, and was then held in a 150°C thermostatic chamber for 500 hours. The decrease in weight from the weight measured before the heating was determined as evaporation loss.

[Table 1]

**Table 1**

| | Example 1 | Example 2 | Comparative Example 1 | Comparative Example 2 | Comparative Example 3 | Comparative Example 4 | Comparative Example 5 |
|---|---|---|---|---|---|---|---|
| Base oil | trimethylolpropane fatty acid ester 1 (TMP 1) | pentaerythritol fatty acid ester (POE) | trimethylolpropane fatty acid ester 2 (TMP 2) | diester (DE) | poly(α-olefin) (PAO) | alkyl diphenyl ether (ADE) | mineral oil (MO) |
| Kinematic viscosity of base oil (mm²/s @ 40°C) | 20 | 19 | 20 | 19 | 18 | 22 | 19 |

The results are shown in Fig. 3. The trimethylolpropane fatty acid ester 1 of Example 1 and the pentaerythritol fatty acid ester of Example 2 show an especially small vaporization loss and have excellent heat resistance. The trimethylolpropane fatty acid ester 2 of Comparative Example 1 has the same base-oil kinematic viscosity as the trimethylolpropane fatty acid ester 1, but has an evaporation loss which exceeds the range according to the invention.

### (TEST 2)

A trimethylolpropane fatty acid ester having a kinematic viscosity of 20 mm²/s (40°C) was used as a base oil, and the ratio in which cyclohexylamine and stearylamine were mixed was changed as shown in Table 2 to prepare test greases. In the procedure, a half of the trimethylolpropane fatty acid ester was placed in a first vessel, and cyclohexylamine and stearylamine were added thereto so as to result in each of the molar ratios shown in the table. The mixture was heated to 70-80°C. Meanwhile, the remaining half of the trimethylolpropane fatty acid ester was placed in a second vessel, and diphenylmethane diisocyanate was added thereto. This mixture was heated to 70-80°C. The contents of the second vessel were introduced into the first vessel, and the resultant mixture was stirred. Although the temperature of the contents rose due to the heat of reaction, the mixture in this state was continuously stirred for about 30 minutes to sufficiently conduct the reaction. Subsequently, the reaction mixture was heated, held at 170-180°C for 30 minutes, and then cooled to room temperature. Thereafter, an antioxidant was added thereto, and this mixture was passed through a roll mill to thereby obtain a test grease.

For the purpose of comparison, a trimethylolpropane fatty acid ester having a base-oil kinematic viscosity of 93 mm2·s (40°C) was used to prepare a test grease for which cyclohexylamine and stearylamine were used in an equimolar amount (Comparative Example 6).

[Table 2]

**Table 2**

| | Example 3 | Example 4 | Example 5 | Example 6 | Example 7 | Example 8 | Example 9 | Comparative Example 6 |
|---|---|---|---|---|---|---|---|---|
| Thickener | diurea compound | | | | | | | |
| Amine ingredient (alicyclic:aliphatic) | 30:70 | 40:60 | 45:55 | 50:50 | 20:80 | 60:40 | 100:0 | 50:50 |
| Amount of thickener (mass %) | 16 | 17 | 16 | 16 | 16 | 16 | 17 | 15 |

| Base oil | trimethylolpropane fatty acid ester | | | | | | | |
|---|---|---|---|---|---|---|---|---|
| Kinematic viscosity of base oil (mm²/s @ 40°C) | 20 | 20 | 20 | 20 | 20 | 20 | 20 | 93 |
| Amount of evaporation (mass %) | 10.3 | 10.3 | 10.3 | 10.3 | 10.3 | 10.3 | 10.3 | 47 |
| Worked consistency | 243 | 237 | 244 | 225 | 247 | 234 | 206 | 211 |

Each test grease was packed into bearing "6011 VV", manufactured by NSK Ltd., so that the test grease occupied 30% by volume of the bearing space. Thus, test bearings were obtained. Each test bearing was continuously rotated at room temperature for 1 hour at 13,800 min⁻¹ (dmN, 1,000,000), and the increase in bearing temperature from the bearing temperature measured before the rotation was determined. The bearing temperature was determined by measuring the temperature of the outer ring.

Furthermore, 50 g of each test grease and a roll were placed in a cylindrical cylinder, and this cylinder was rotated to revolve the roll along the inner surface of the cylinder and thereby apply shear force to the test grease. In this operation, the cylinder temperature was regulated to 120°C, and the cylinder was continuously rotated for 24 hours at a rotation speed of 165 min⁻¹. After the rotation, the worked consistency was measured at room temperature, and the change from the worked consistency measured before the rotation was determined.

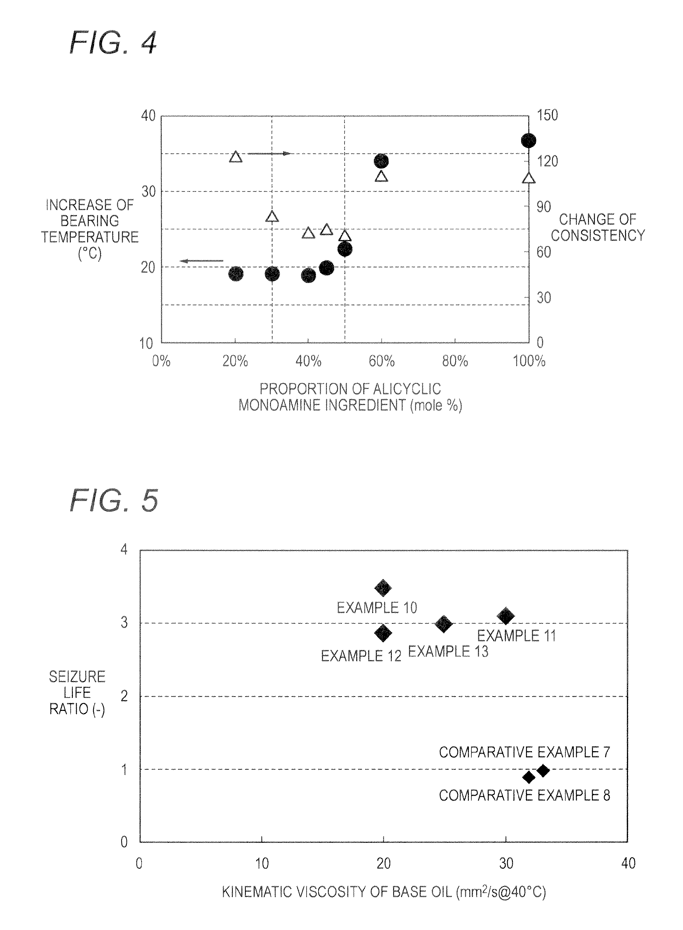

The results are shown in Fig. 4, in which the open triangles indicate changes of consistency and the solid circles indicate increases of bearing temperature. As the figure shows, by regulating the proportion of the alicyclic monoamine to 30-50% by mole, small consistency changes are obtained and the bearing temperature can be inhibited from rising.

### (TEST 3)

The test greases shown in Table 3 were prepared. In Examples 10 to 13 and Comparative Example 8, a half of the base oil was placed in a first vessel, and cyclohexylamine and stearylamine were added thereto in an equimolar amount. The mixture was heated to 70-80°C. Meanwhile, the remaining half of the base oil was placed in a second vessel, and diphenylmethane diisocyanate was added thereto. This mixture was heated to 70-80°C. The contents of the second vessel were introduced into the first vessel, and the resultant mixture was stirred. Although the temperature of the contents rose due to the heat of reaction, the mixture in this state was continuously stirred for about 30 minutes to sufficiently conduct the reaction. Subsequently, the reaction mixture was heated, held at 170-180°C for 30 minutes, and then cooled to room temperature. Thereafter, an antioxidant was added thereto, and this mixture was passed through a roll mill to thereby obtain a test grease. In Comparative Example 7, stearic acid was reacted with lithium hydroxide in the base oil to yield a lithium soap, and the resultant mixture was cooled to room temperature to obtain a test grease.

Forty grams of the base oil for each test grease was weighed out and placed on a petri dish made of stainless steel, and was then held in a 150°C thermostatic chamber for 250 hours. The decrease in weight from the weight measured before the heating was determined as amount of evaporation.

Furthermore, each test grease was packed into a deep-groove ball bearing having an inner diameter of 50 mm, outer diameter of 90 mm, and width of 20 mm and equipped with non-contact rubber seals, so that the test grease occupied 20% by volume of the bearing space. Thus, test bearings were produced. Each test bearing was rotated under the conditions of an inner-ring rotation speed of 10,000 min⁻¹, a bearing outer-ring temperature of 100°C, and an axial load of 980 N. At the time when the outer-ring temperature had become higher by 10°C than the set value, this bearing was regarded as having undergone seizure. The time period to the seizure was measured. The results are shown in Table 3 and Fig. 5. It can be seen that the bearings have an excellent seizure life so long as the base oil includes a trimethylolpropane fatty acid ester and the base-oil kinematic viscosity is within the range according to the invention.

[Table 3]

**Table 3**

| | Example 10 | Example 11 | Example 12 | Example 13 | Comparative Example 7 | Comparative Example 8 |
|---|---|---|---|---|---|---|
| Thickener | diurea compound | diurea compound | diurea compound | diurea compound | Li soap | diurea compound |
| Amount of thickener (mass %) | 13 | 13 | 13 | 13 | 12 | 15 |
| Base oil | TMP (A) | TMP (A) + TMP (B) | TMP (A) + TMP (C) | TMP (A) + PAO | polyol ester | alkyl diphenyl ether |
| Kinematic viscosity of base oil (mm²/s @ 40°C) | 20 | 30 | 20 | 25 | 33 | 32 |
| Extreme-pressure agent | none | none | none | none | none | none |
| Worked consistency | 275 | 275 | 275 | 275 | 270 | 280 |
| Amount of evaporation (mass %) | 10.3 | 13.4 | 14.7 | 12.1 | 29.0 | 30.6 |
| Seizure life ratio | 3.5 | 3.1 | 2.9 | 3.0 | 1.0 | 0.9 |

| | | | | | | |
|---|---|---|---|---|---|---|
| TMP (A): kinematic viscosity = 20 mm²/s @ 40°C TMP (B): kinematic viscosity = 45 mm²/s @ 40°C TMP (C): kinematic viscosity = 19.5 mm²/s @ 40°C PAO: kinematic viscosity = 32 mm²/s @ 40°C Polyol ester: kinematic viscosity = 33 mm²/s @ 40°C Alkyl diphenyl ether: kinematic viscosity = 32 mm²/s @ 40°C | | | | | | |

While the invention has been described in detail and with reference to specific embodiments thereof, it will be apparent to one skilled in the art that various changes and modifications can be made therein without departing from the spirit and scope thereof.

This application is based on a Japanese patent application filed on September 30, 2011 (Application No. 2011-216994), the contents thereof being incorporated herein by reference.

### Industrial Applicability

The present invention is useful in or as rolling bearings for use in applications where the bearings are rotated at high speeds, such as drive motors for hybrid vehicles (HEV), fuel-cell vehicles (FV), and electric vehicles (EV) and machine tools, etc.

### Explanations of Reference Signs

- 1: Ball bearing
- 10: Inner ring
- 11: Outer ring
- 12: Cage
- 13: Ball
- 14: Seal
- G: Grease composition

## Claims

1. A grease composition for rolling bearings, **characterized by** comprising a base oil and a diurea compound incorporated therein as a thickener, the base oil comprising at least one oil selected from trimethylolpropane fatty acid ester oils and pentaerythritol fatty acid esters or a mixed oil which comprises the at least one oil and another lubricating oil and having a kinematic viscosity at 40°C of 19-35 mm²/s and an amount of evaporation through 250-hour holding at 150°C of 10-15% by mass.

2. The grease composition for rolling bearings according to claim 1, **characterized in that** the diurea compound is represented by the following general formula (1): 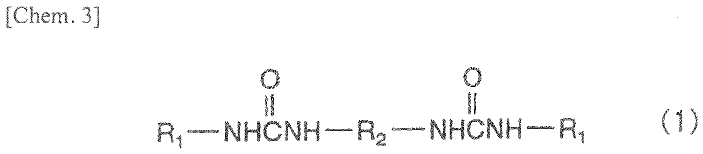 (wherein R₁ represents an alkyl group having 6-20 carbon atoms, a cyclohexyl group or an alkylcyclohexyl group having 7-12 carbon atoms, and the two R₁ moieties may be different or the same; and R₂ represents a divalent hydrocarbon group containing an aromatic ring and having 6-15 carbon atoms).

3. The grease composition for rolling bearings according to claim 2, **characterized in that** the diurea compound is a mixture of an aliphatic diurea compound and an alicyclic diurea compound, a proportion of the alicyclic diurea compound being 30-50% by mole.

4. A rolling bearing **characterized by** being packed with the grease composition according to any one of claims 1 to 3.
